**Europäisches Patentamt**

**European Patent Office**

**Office européen des brevets**

(11) Publication number: **0 200 386**
**B1**

(12) **EUROPEAN PATENT SPECIFICATION**

(45) Date of publication of patent specification: **09.05.90**

(21) Application number: **86302583.9**

(22) Date of filing: **08.04.86**

(51) Int. Cl.⁵: **B 60 T 13/14**

(54) **Power booster valve arrangement.**

(30) Priority: **29.04.85 US 728262**

(43) Date of publication of application:
**05.11.86 Bulletin 86/45**

(45) Publication of the grant of the patent:
**09.05.90 Bulletin 90/19**

(84) Designated Contracting States:
**DE FR GB**

(56) References cited:
**GB-A-2 142 398**
**US-A-3 898 808**
**US-A-4 319 455**

(73) Proprietor: **GENERAL MOTORS CORPORATION**
**General Motors Building 3044 West Grand**
**Boulevard**
**Detroit Michigan 48202 (US)**

(72) Inventor: **Flory, Donald Marion**
**3620 Arcanum-Bearsmill Road**
**Arcanum Ohio 45304 (US)**

(74) Representative: **Denton, Michael John et al**
**Patent Section - Luton Office (F6) Vauxhall**
**Motors Limited P.O. Box 3 Kimpton Road**
**Luton Bedfordshire LU2 0SY (GB)**

## Description

This invention relates to a valve arrangement for a hydraulic power booster, as, for example, disclosed in GB-A-2,142,398.

More specifically, the invention is concerned with a valve arrangement suitable for use in a power booster of the hydraulic type in which pressurized hydraulic fluid is supplied to the booster, and, under the control of the valve mechanism herein claimed, the fluid pressure is selectively placed in communication with a power chamber to act on a booster power piston to actuate the booster. The valve mechanism is of closed-centre construction, and it is preferably used in a power booster for a brake system, with the booster actuating at least one hydraulic brake circuit through the intermediary of a master cylinder arrangement.

The invention is concerned with a fluid pressure control valve mechanism which permits a pressure seal for a booster power piston or the like to be at exhaust pressure at all times other than when the booster or the like is being actuated by hydraulic pressure.

To this end, a fluid pressure control valve mechanism in accordance with the present invention is characterised over GB-A-2,142,398 by the features specified in the characterising portion of claim 1.

In a preferred embodiment of a fluid pressure control valve mechanism in accordance with the present invention, as applied to a hydraulic power booster, supply pressure is provided to an annular chamber within the booster power piston and around a portion of the control valve body. The pressure is retained in this annular chamber by seals on the valve body co-operating with a bore wall in the power piston. Actuating pressure is applied to the power piston only when it is desired to actuate the booster. This is accomplished by the valve arrangement embodying the invention. Initial movement of the valve body causes one of the valve body seals to open the pressure-charged annular chamber within the power piston to the power chamber to transmit pressure thereto. The valve body also operates in valving relation with a portion of the bore of the power piston to control the exhaust of hydraulic pressure from the power chamber, and therefore controls the actuating pressure in the power chamber which acts on the power piston.

This arrangement permits the pressure seal for the power piston to be at exhaust pressure at all times other than when the booster is being actuated by hydraulic pressure. The power piston seal is therefore not continuously subjected to supply pressure, which could cause pressure leakage when the booster is in the released condition and thereby cause the system pump to have to continually make up pressure to take care of the loss in pressure due to such leakage.

The booster is disclosed and claimed in EP-A-0,200,387 (Serial No. 86302584.7) based on USSN 728,279.

In US-A-4 319 455 there is disclosed a power booster in a vehicle brake system, having a spool-type control valve received within the booster power piston. A piston seal carried by the power piston is at all times in communication with a power chamber containing hydraulic fluid at booster supply pressure.

In the drawings:

Figure 1 is a longitudinal sectional view, with parts broken away and in elevation, and with other parts illustrated schematically, illustrating a brake system incorporating the hydraulic booster valve arrangement to which the invention is directed;

Figure 2 is an enlarged fragmentary sectional view of the booster valve arrangement of Figure 1 with the valve arrangement in the actuated condition;

Figure 3 is an enlarged fragmentary cross-sectional view, with parts broken away, of the booster valve arrangement of Figures 1 and 2, in the direction of the arrows 3–3 of Figure 2; and

Figure 4 is a perspective view of a seal used in the valve arrangement.

As is shown in the drawings, a booster and master cylinder assembly 10 has a fluid reservoir 12 with a reservoir chamber 14 therein normally containing hydraulic fluid to serve the booster and the entire brake system. The booster embodying the invention is shown as a part of a brake system for automotive vehicles' but the booster could be used for other purposes.

The assembly 10 has a housing 16 containing a master cylinder section 18 and a power booster section 20. The housing 16 has bosses 22 and 24 formed thereon for mounting the reservoir 12 and providing fluid connections between the reservoir chamber 14 and the appropriate portions of the master cylinder section 18 and the power booster section 20. In the construction illustrated, the boss 22 has a recess 26 receiving a spigot 28 formed as a part of the reservoir 12, with a seal 30 positioned to seal the spigot relative to the recess wall. The bottom of the recess 26 is provided with compensation ports 32 and 34 for the master cylinder section 18, as will be further described. The boss 24 is illustrated as having a flat top surface 36 and a port 38 formed therethrough and extending into the housing of the power booster section 20 to connect with the reservoir chamber 14, as will be further described. A seal 40 seals the reservoir 12 relative to the boss top surface 36. The reservoir port 42 formed in the bottom of the reservoir 12 is in alignment with the port 38 and is in continuous fluid communication therewith.

The housing 16 has a bore 44 extending therein from the rear end 46 to the front end thereof, the bore terminating at the front end in an end wall 48. The bore side wall 50 is formed to have various diameters' shoulders and recesses, as will be further described.

A conduit retainer and piston guide member 52 is received within the bore 44 so that it is axially located against a tapered shoulder 54 of the bore side wall 50. The member 52 is annular, with circumferentially external seal grooves 56 and 58 formed therein in axially spaced relation and respectively receiving O-ring seals 60 and 62. The seals 60 and 62 seal against the adjacent portions of the bore wall 50. An internal groove-like recess 64 is formed in the bore wall 50, with the member 52 being so axially located that the seals 60 and 62 are on axially opposite sides of and beyond the groove-like recess 64. Therefore the recess 64 of the bore wall 50 and the member 52 co-operate to define an annular chamber 66 which is sealed against pressure leakage along the bore wall. The inner annular surface 68 of the member 52 is provided with an inner seal groove 70 containing an O-ring seal 72 therein. The inner annular surface 68 and the O-ring seal 72 co-operate with a portion of the power piston, to be described, to guide the forward end of the power piston and also to seal it. The groove 70 and the seal 72 are located generally radially inwardly of the seal groove 56 and the seal 60. A suitable passage formed within the member 52 connects the annular chamber 66 to a passage forming a connection to a tubular conduit, to be described.

Another annular piston guide 76 is received in the rear portion of the bore 44. It is provided with a land 78 having an outer circumferential seal groove 80 formed therein containing an O-ring seal 82. The seal 82 seals against the adjacent portion of the bore wall 50. A snap ring 84 mounted in a ring groove 86 formed in the portion of the bore wall 50 adjacent the housing end 46 acts as a stop and retainer for the piston guide 76. The inner annular surface 88 of the piston guide 76 has a seal groove 90 formed therein. The seal 92 and a back-up washer 94 are contained within the groove 90, with the seal 92 sealing against another portion of the power piston to be described. The inner annular surface 88 has an undercut portion 96 extending axially and opening into the bore 44 for purposes to be described. The piston guide 76 is also axially located by a tapered shoulder 98 formed as a part of the bore wall 50 and also forming a portion of a booster power chamber 100 into which the piston guide undercut portion 96 opens.

The power piston 102 has a land forming a head 104, with a reduced-diameter rearward extension section 106 and a reduced-diameter forward extension section 108 extending from opposite axial sides of the piston head 104. The piston head 104 has a seal groove 110 formed in the outer periphery thereof and containing an O-ring seal 112. This seal is in reciprocable sealing relation with the centre portion of the bore wall 50 just forward of the tapered shoulder 98. The forward extension section 108 of the power piston extends through the member 52 in close but slightly radially spaced relation to the inner annular surface 68 of the member 52. The seal 72 is thereby in reciprocable sealing relation with the outer surface of the power piston forward extension section 108. An annular chamber 114 is defined by the piston head 104, the piston forward extension section 108, one side of the member 52, and the bore wall section 116 of the bore 50 in which the member 52 and the power piston land 104 are received. An annular recess provided by an undercut section 118 of the bore wall section 116 slightly enlarges a portion of the outer diameter of the annular chamber 114 axially beyond the point at which the power piston land 104 may move at maximum booster actuation so that the port 38, opening into the bore 44 through the undercut section 118, is always hydraulically fluid-connected to the reservoir chamber 14. Therefore the annular chamber 114 is always at exhaust (reservoir) pressure.

A tubular conduit 120, formed from a hollow tube and made of a spring material, is received in the chamber 114 about the piston extension section 108' the tubular conduit being in a coil-spring form. One coil end of the spring-form tubular conduit 120 engages the member 52 in spring-reaction relation, and the other end similarly engages the side 122 of the power piston head 104 in spring-reacting relation. These sides engaged by the tubular conduit and the spring 120 have circular ramps which provide reaction engagement of a major portion of the end coil as the spring is compressed.

As is more particularly illustrated, described and claimed in the said EP-A-0,200,387, the tubular conduit end 124 is secured to a passage formed in a part of the power piston head 104 to provide a fluid connection 128. The other end 130 of the tubular conduit 120 is similarly connected to a passage formed in the member 52 by means of a connection 132. The passage in the member 52 to which the tubular conduit end 130 is connected is formed in the member 52 so that it opens into the annular chamber 66 and is therefore in constant fluid communication with that chamber.

The power piston 102 has a bore 134 formed therein so as to be open at the rear end of the piston extension 106 and to extend through that extension, through the power piston land 104 and through an axial portion of the forward piston extension 108. The bore 134 terminates axially within the piston extension section 108 so that the forward end of the bore 134 is closed by a bulkhead providing an end wall 136. Another recess-like bore 138 is formed axially into the piston extension section 108 from the forward end thereof, terminating at the bulkhead end wall 140. A valve body 142, to be further described, is reciprocably received within the power piston bore 134. The valve body 142 is held therein by a retainer and stop such as a snap ring 144 located in the rear end of the bore 134. The forward end 146 of the valve body 142 co-operates with the bore wall 148 of the bore 134, and particularly the portion thereof adjacent the end wall 136, to define a chamber 150. A piston return spring 152 is located in the chamber 150 and engages the end wall 136 of the power piston extension 108 and the end 146 of the valve body 142 so as to continually urge the valve body 142 towards its stop 144. A cross-passage 154 in the piston extension section 108 intersects the chamber 150 so that the chamber 150 is always in fluid communication with the annular chamber 114 and, through the ports 38 and 42, with the reservoir chamber 14. The portion of the bore wall 148 radially inwardly of the power piston head 104 has an enlarged-diameter inwardly-opening groove 156 formed therein. The groove 156 co-operates with the valve body 142 to define an annular chamber 158. The passage into which the tubular conduit end 124 opens within the land 104 connects with the chamber 158 so that hydraulic fluid supply pressure within the tubular conduit 120 is directly communicated to the annular chamber 158 at all times.

The side 160 of the power piston 102 defining a portion of the power chamber 100 is axially adjacent a cross-passage 162 formed in a reduced-diameter portion of the power piston 102. The outer end of the passage 162 opens into and is an effective part of the power chamber 100. The inner end of the passage 162 opens into an annular inwardly-opening groove 164 formed in a portion of the wall of the bore 134. Another groove 166 formed in a portion of the wall of the bore 134 is axially spaced slightly rearwardly of the groove 164. The groove 166 has a forward edge 168 and a rearward edge 170. The forward edge 168 is one part of the control valve which controls the pressure in the power chamber 100 during booster actuation. The other part is formed on the valve body 142, as will be described.

Axially spaced slightly rearwardly of the groove 166 is a shoulder 172, formed as a part of the bore wall of the bore 134 and also forming the forward end of a slightly enlarged bore section 174 of the bore 134. A cross-passage 176 formed through the rearward extension section 106 of the power piston 102 opens the forward end of the bore section 174 to the undercut 96 formed in the piston guide 76 so that pressure in the power chamber 100 is transmitted through the undercut 96 and the cross-passage 176 to a reaction chamber 178 defined by the forward part of the bore section 174, the shoulder 172 and a part of the valve body 142.

The valve body 142 has a rearwardly located land 180 located in the rearward portion of the bore section 174. The land 180 has an outer peripheral seal groove 182 formed therein, with an O-ring seal 184 located in the groove 182 so as to be in sealing relation with the portion of the bore wall defining the bore section 174. In the released position of the valve body, the rear end 186 of the valve body 142 is engageable with the stop 144. A push rod 188 extends into and is pivotally secured within a recess 190 formed in the rear end of the valve body 142 so that the push rod may be axially actuated to move the valve body 142 forwardly relative to the piston 102 and the housing 16 to actuate the booster. A shoulder 192 defining the forward end of the land 180 leads to a slightly reduced-diameter portion 194 of the valve body 142, which terminates at another shoulder 196 on the valve body. The outer periphery of the reduced-diameter portion 194 generally defines the inner periphery of the reaction chamber 178.

Forwardly beyond the shoulder 196, the valve body 142 has a further reduced-diameter portion 198 which extends into the annular chamber 200 formed by the groove 166 and the valve body 142. The forward end of the reduced-diameter portion 198 terminates at a shoulder 202, the corner edge 204 of which co-operates with the groove edge 168 to provide the control valve for controlling the pressure in the power chamber 100 when the booster is actuated.

The valve body 142 has a still further reduced-diameter portion 206 extending forwardly of the shoulder 202 and positioned radially inwardly of the bore groove 164. The valve body reduced-diameter portion 206 co-operates with the groove 164 and the adjacent portions of the bore wall of the bore 134 to define an annular chamber 208 which is continuously connected to the power chamber 100 by the cross-passage 162 and therefore effectively forms a part of the power chamber 100. The valve land 210 formed on the valve body 142 forwardly of the reduced-diameter portion 206 has a seal groove 212 at its forward side, with the forward wall of the seal groove being of a slightly lesser diameter than the rearward wall formed by the land 210. The forward wall of the seal groove is defined by a slightly reduced-diameter portion 214 of the valve body 142, that portion extending from the groove 156 into the bore wall 148 forming a part of the chamber 150. A truncated rectangular cross-section seal 216 is received in the seal groove 212 with the truncated corner 226 thereof facing radially outwardly and forwardly. The forward end of the valve body reduced-diameter portion 214 has a seal groove 218 formed in the outer periphery thereof and containing an O-ring seal 220 which seals against the bore wall 148.

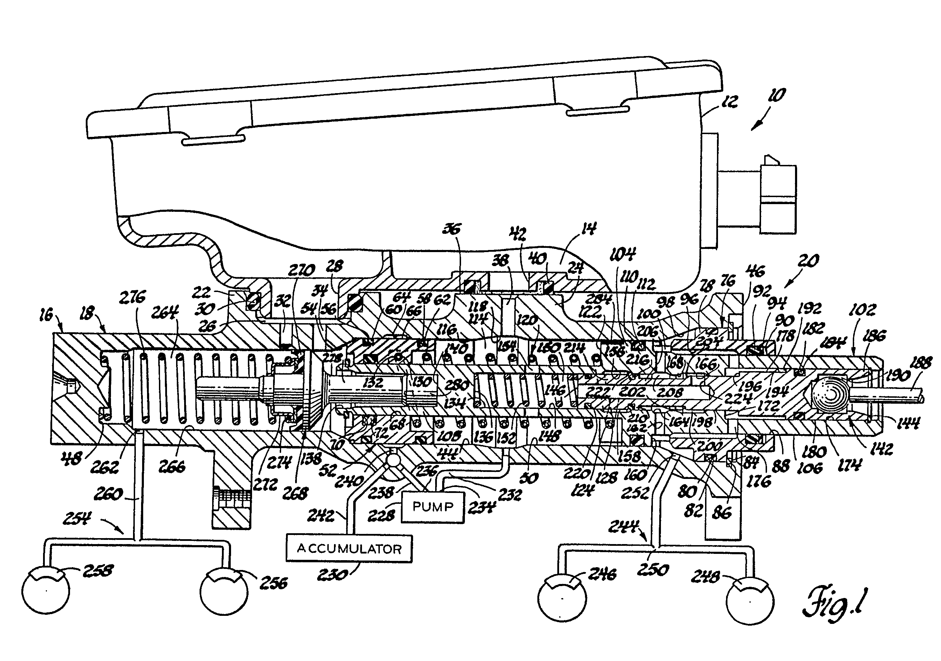

In the released position illustrated in Figure 1, the seal 216 seals against the portion of the bore wall 148 just rearwardly of a groove edge 222 of the groove 156. The seals 216 and 220 therefore seal the annular chamber 158 during booster release so that hydraulic supply pressure provided to that chamber is not permitted to pass beyond the chamber.

The valve body 142 has a radially and axially extending passage 224 opening through the reduced-diameter portion which opens into the groove 166 and the annular chamber 200 defined by the groove 166 and the valve body 142, so as to continuously connect the chamber 200 by way of the valve body passage 224, the chamber 150, the cross-passage 154, the chamber 114 and the ports 38 and 42 to the reservoir chamber 14. The annular chamber 200 is therefore always at reservoir pressure, and is downstream of any hydraulic pressure flow passing through the booster, that flow and pressure being controlled by the valve formed by the groove edge 168 and the valve body corner edge 204.

A source of supply pressure is illustrated schematically as including a pump 228 and a pressure accumulator 230 which is pressure-charged by the pump 228. The pump 228 receives fluid from the reservoir chamber 14 through a conduit 232 connecting with the chamber 114 through the undercut 118. The conduit 232 is connected to the pump inlet 234. The pump outlet 236 is connected by a conduit 238 to a passage 240 formed in the housing 16 and opening into the annular chamber 66. The conduit 238 and the passage 240 are also connected by a conduit 242 to the accumulator 230 so that the accumulator is charged by hydraulic pressure generated by the pump 228 and is able to supply that pressure by way of the passage 240 to the annular chamber 66 and thence through the tubular conduit 120 to the annular chamber 158.

The booster is illustrated as part of a hydraulic brake system for a vehicle. The system has a first brake circuit 244 containing first and second wheel brakes 246 and 248 connected by a conduit arrangement 250 to an outlet 252 formed in the housing 16 and opening into the power chamber 100, appropriately through the tapered shoulder 98. Thus power chamber actuating pressure is directly applied to the wheel brakes 246 and 248. By way of example, these wheel brakes may be the front axle brakes of a vehicle.

The other brake circuit 254 is illustrated as including a pair of wheel brakes 256 and 258 connected by a conduit arrangement 260 to an outlet 262 formed in the housing 16 and opening into the forward portion of the pressurizing chamber 264 of the master cylinder section 18. By way of example, the wheel brakes 256 and 258 may be the rear axle wheel brakes of a vehicle.

The pressurizing chamber 264 is located in the forward bore section 266 of the housing bore 44. A master cylinder pressurizing piston 268 is reciprocably mounted in the bore section 266 and co-operates with the bore section, including the end wall 48, to define the pressurizing chamber 264. The pressurizing piston 268 has a piston cup 270 on the forward side thereof which, in the released position illustrated, just clears the compensation port 32. A cup expander and spring retainer 272 is fitted on the forward side of the piston 268, and provides reaction for the end 274 of the master cylinder piston return spring 276. The other end of the spring 276 reacts against the end wall 48 so that the master cylinder piston is continually urged to the released position shown. A rearward piston extension 278 extends into the recess 138 of the power piston extension section 108 so that the end 280 of the piston extension 278 is in abutting engagement with the end wall 140 at the bottom of the recess 138. Thus the power piston extension section 108 acts as an output member for the booster to operate the master cylinder piston 268.

As is well known in the art, actuating movement of the piston 268 will close off the compensation port 32 and then pressurize brake actuating fluid in the pressurizing chamber 264 to actuate the wheel brakes 256 and 258.

In some arrangements the master cylinder section 18 may be a dual master cylinder in which separate pressurizing pistons and chambers are provided for separate circuits of a brake system.

In the particular arrangement shown, the effective area of the side 160 of the power piston head 104 is equal to the area of the pressurizing side of the master cylinder piston 268, so that the booster pressure generated in the power chamber 100 is at substantially the same pressure as the pressure generated in the pressurizing chamber 264. Therefore the brake-actuating pressures in the circuits 244 and 254 are substantially the same.

Different areas could be provided if it were considered desirable for the brake circuits 244 and 254 to have different brake-actuating pressures.

The brake booster operates as follows. The assembly 10 is illustrated in Figure 1 in the released position before the brake booster is operated. The reservoir 12 has hydraulic fluid in it, and hydraulic fluid fills the various chambers, ports, passages and conduits of the system. The pump 228 has been operational so that it has a full supply pressure charged into the accumulator 230. Full hydraulic supply pressure exists in the annular chamber 66 and therefore in the tubular conduit 120 and the annular chamber 158. The remainder of the system is at exhaust (reservoir) pressure. The pump 228 operates to maintain supply pressure to the annular chamber 66 at all times should the accumulator 230 be discharged below a predetermined minimum level of supply pressure needed. Therefore the pump 228 may or may not be operating at the same time that the booster is being actuated. The pump may, for example, be driven by an electric motor which operates in response to a pressure sensor so as to maintain the desired supply pressure level.

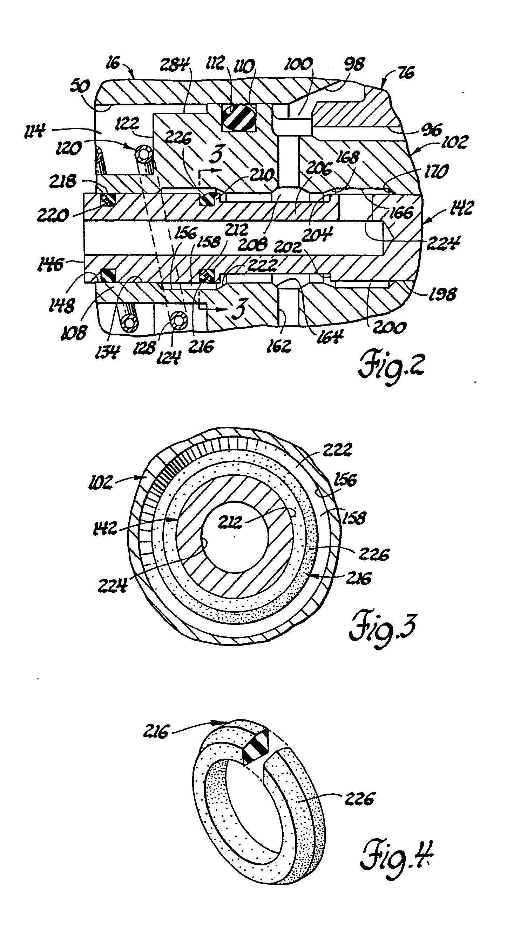

When the booster operator desires to actuate the booster, he moves the push rod 188 forwardly, that is, axially to the left as viewed in Figure 1, to move the valve body 142 relative to the power piston 102. This movement is typically accomplished by means of a brake pedal operatively attached to the push rod 188, and the movement takes place against the return force of the valve return spring 152 contained in the chamber 150. The forward movement of the valve body 142 moves the seal 216 and the land 210 forwardly past the groove edge 222 so that the supply pressure in the annular chamber 158 flows past the land 210 and into the power chamber 100. The supply pressure also tends to flow past the valve formed by the groove edge 168 and the corner edge 204, thereby passing through the annular chamber 200 and back to the reservoir chamber 14 through the passage 224, the chamber 150, the passage 154, the chamber 114 and the ports 38 and 42. However, as the corner edge 204 of the control valve approaches the groove edge 168, the pressure flow therethrough is restricted, so causing the pressure in the power chamber 100 to increase, and thus applying pressure to the power piston to move the power piston leftwardly as viewed in Figure 1. This valve-actuated condition is illustrated in Figure 2.

The actuating pressure so applied in the power chamber 100 will continue to increase with continued forward movement of the valve body 142 relative to the power piston, and consequent greater restriction by the control valve, and will move the power piston 102 further leftwardly, tending to move the groove edge 168 away from the valve corner edge 204 until a balance is reached in which the force generated by the actuating pressure in the power chamber 100 is balanced by the resistance to movement of the power piston 102 by the master cylinder section 18. Further leftward movement of the valve body 142 will again further restrict the valve consisting of the groove edge 168 and the corner edge 204, so causing the pressure in the power chamber 100 to further increase until a new balanced (poised) position is reached.

The actuating pressure in the power chamber 100 also passes through the undercut 96 to the chamber 178, where it acts on the slightly increased diameter portion of the valve body 142 to provide a hydraulic reaction force urging the valve body 142 rightwardly as viewed in Figure 1 so that this force is felt by the booster operator through the push rod 188.

As the power piston 102 moves in the actuating direction, it compresses the coiled tubular conduit 120, which is also the power piston return spring. It also moves the piston forward extension section 108 leftwardly, so moving the pressurizing piston 268 leftwardly to initially close the compensation port 32 and then pressurize hydraulic fluid in the pressure chamber 264. The fluid so pressurized in the chamber 264 passes through the outlet 262 and the conduit arrangement 260 to actuate the wheel brakes 256 and 258 in the circuit 254.

In the particular arrangement illustrated in the drawings, the effective area of the power piston on which the actuating pressure in the chamber 100 acts is equal to the effective area of the pressurizing piston 268 in the master cylinder section. Therefore the actuating pressure in the power chamber 100 is substantially equal to the pressure generated in the pressure chamber 264. Therefore, it being desirable in this instance to have the same brake-actuating pressures in the two brake circuits 244 and 254, a second master cylinder section is not required to pressurize the brake circuit 244. Instead, the actuating pressure in the power chamber 100 passes through the outlet 252 and the conduit 250 to actuate the wheel brakes 246 and 248. At all times during actuation of the booster, excess supply pressure over that required to actuate the booster in the power chamber 100 passes through the valve formed by the groove edge 168 and the corner edge 204 and is exhausted to the reservoir 12 as above described.

When the booster operator reduces or releases the actuating force on the push rod 188, the valve body 142 moves rightwardly as viewed in Figure 1 in response to the bias of the spring 152 and the hydraulic reaction force, so opening the valve formed by the groove edge 168 and the valve corner edge 204, whereby the actuating pressure in the power chamber 100 is reduced by exhausting more of the pressure to the reservoir. If the actuating force is fully removed from the push rod 188, the valve body 142 will return to the position shown in Figure 1, wherein the control valve is fully opened so that the pressure in the power chamber 100 is fully exhausted to the reservoir. The land 210 and the seal 216 move rightwardly so as to pass beyond the groove edge 222 and close the fluid connection between the annular chamber 158 and the power chamber 100. The power piston return spring 120 will move the power piston 102 rightwardly as the actuating pressure in the power chamber 100 decreases, so returning the piston to the position shown. This movement of the power piston 102 will also permit the pressurizing piston 268 to be returned to the released position shown by the action of its spring 276 as well as by brake actuating pressure in the brake circuit 254. When the cup 270 moves rightwardly so as to uncover the compensation port 32, any pressure remaining in the circuit 254 will be exhausted to reservoir through the compensation port.

In the released position, reservoir (exhaust) pressure, typically atmospheric pressure, exists on both sides of the power piston head 104, and therefore its seal 112 is not sealing against an unbalanced pressure. A full charge of supply pressure is still maintained in the annular chamber 158, and only the seals 216 and 220 are required to seal this pressure. During booster operation, as shown in Figure 2, only the seal 220 is sealing full supply pressure, thus minimizing the seal drag due to high pressure on relatively large seal areas and reducing by one seal the number of valve body seals dynamically engaging a bore wall in sealing relation.

The tubular conduit 120, in serving the dual function of conducting hydraulic supply pressure to the chamber 158 and also acting as the piston return spring, contributes to the overall reduction in length of the booster assembly, since the point of introduction of supply pressure to the booster at the passage 240 does not have to accommodate the full stroke of the booster piston 102. Instead, this is accommodated by the compression and expansion of the piston return spring as it conducts the supply pressure from that point to the axially movable annular chamber 158.

## Claims

1. A fluid pressure control valve mechanism comprising
a housing (102) having a valve bore (134) therein, the valve bore (134) having a cylindrical wall (148), and the cylindrical wall (148) having a first annular recess (156) and a second annular recess (166) formed therein in axially spaced relation;

a fluid pressure-receiving passage (128) in the housing (102) adapted to receive full supply fluid pressure from a fluid pressure source (228, 230);

a fluid pressure-actuating power chamber passage (162, 164) formed in the housing (102) axially intermediate and axially spaced from the first and second annular recesses (156, 166) and adapted to conduct controlled-pressure fluid to a fluid pressure-operated member (244);

a fluid-pressure exhaust pressure passage (154) formed in the housing (102) and spaced axially from and on the opposite side of the first annular recess (156) from the second annular recess (166);

a spool valve member (142) reciprocably received in the housing bore (134) and having:

passage means (224) in the spool valve member (142) open to the second annular recess (166) and also open to the exhaust passage (154);

first and second annular seals (220, 216) normally sealing between the valve member (142) and the bore wall (148) so that the first annular seal (220) always seals against fluid pressure communication between the first annular recess (156) and the exhaust passage (154) and the second annular seal (216) normally seals against fluid pressure communication between the first annular recess (156) and the fluid pressure-actuating power chamber passage (162, 164),

the second annular seal (216) being moved axially into the first annular recess (156) upon initial axial actuating movement of the valve member (142) to open fluid pressure communication from the first annular recess (156) to the fluid pressure-actuating power chamber passage (162, 164) and a valve member reduced-diameter portion (206), and thence adapted to provide fluid supply pressure from the pressure source (228, 230) to the fluid pressure-actuating power chamber passage (162, 164),

characterised in that the spool valve member (142) also has a first land (210) formed with first and second seal grooves (218, 212) which are spaced axially further apart than the axially extending width of the first annular recess (156), and a second land (198) axially spaced from the first land (210) by a valve member reduced-diameter portion (206), the second land (198) having a circumferentially extending corner edge (204) forming one part of a control valve (168, 204) and in valving relation with a mating inner circumferentially extending corner edge (168) of the second annular recess (166) forming another part of the control valve (168, 204); in that the passage means (224) in the spool valve member (142) opens through the second land (198); in that the valve member reduced-diameter portion (206) is in continuous fluid communication with the fluid pressure-actuating power chamber passage (162, 164); and in that the first and second annular seals (220, 216) are respectively disposed in the first and second seal grooves (218, 212);

axial actuating movement of the valve member (142) causing the valve parts (204, 168) to act in valving relation to modulate and control fluid pressure and flow from the fluid pressure-actuating power chamber passage (162, 164) to establish and maintain desired fluid actuating pressure in the fluid pressure-actuating power chamber passage (162, 164), with excess pressure fluid exhausting past the valve parts (204, 168) and through the second annular recess (166) and the valve member passage (224) to the exhaust passage (154).

2. A fluid pressure control valve mechanism according to claim 1, in a hydraulic power booster (20) having a booster housing (16) with a power piston (102) reciprocably received in the booster housing (16) for actuation by controlled hydraulic pressure from a fluid pressure source (228, 230) as aforesaid drawing hydraulic pressure fluid from a hydraulic fluid reservoir (12), the power piston (102) forming the said control valve mechanism housing (102), characterised in that a first chamber (158) is defined by the power piston (102) and the spool valve member (142), the first and second annular seals (220, 216) are spaced apart on the spool valve member (142) to provide a normally closed space in the first chamber (158) having hydraulic supply pressure therein provided by the fluid pressure source (228, 230), a second chamber (208) is defined by the booster housing (16) and the power piston (102) and the spool valve member (142) and forms a power pressure chamber adapted to selectively receive hydraulic actuating pressure from the first chamber (158) to act on the power piston (102) to actuate the booster (20), a third chamber (200) is defined by the power piston (102) and the spool valve member (142), with the said control valve (168, 204) providing valving communication between the second chamber (208) and the third chamber (200), the third chamber (200) being continuously fluid-connected to the reservoir (12), the spool valve member (142) being movable relative to the power piston (102) in a booster-actuating direction to cause the second seal (216) to open fluid communication between the first (158) and second (208) chambers and also cause the control valve (168, 204) to modulate pressure flow from the second chamber (208) to the third chamber (200) and the reservoir (12) to control the effective hydraulic fluid pressure in the second chamber (208) acting on the power piston (102) and thus control actuation and release of the booster (20), the spool valve member (142) upon being released returning to a position wherein the second seal (216) re-establishes the first chamber (158) as a closed space and the control valve (168, 204) opens to relieve pressure in the second chamber (208) to the fluid pressure in the third chamber (200) and the reservoir (12).

3. A fluid pressure control valve mechanism according to claim 1 or 2, characterised in that the first annular recess (156) forms an annular hydraulic fluid supply pressure chamber (158) in the bore wall (148) about the spool valve member (142), the second seal groove (212) extends circumferentially in the spool valve member (142) and the second annular seal (216) received therein is made of rubber-like (elastomeric) material, the second annular seal (216) has a first position in which it seals against the bore wall (148) and the spool valve member (142) to prevent pressure loss from the annular hydraulic fluid supply pressure chamber (158) past the second seal (216) and is movable by axial movement of the spool valve member (142) to a second position wherein the second seal (216) is positioned within the annular hydraulic fluid supply pressure chamber (158) and is in radially spaced relation from the bore wall (148) so as to permit hydraulic fluid supply pressure to freely pass the second seal (216), and the second seal (216) has a truncated rectangular cross-section in which the one rectangular cross-section corner located radially outwardly and towards the annular hydraulic fluid supply pressure chamber (158) is bevelled off to pre-shape the second seal (216) to substantially the shape that the said second seal (216) assumes when in the first position with pressure in the annular hydraulic fluid supply pressure chamber (158) acting on one side thereof and on the bevelled-off surface (226), thereby reducing the seal friction drag on the bore wall (148) and minimizing pressure distortion of the second seal (216) on the side thereof opposite the annular hydraulic fluid supply pressure chamber (158) between the bore wall (148) and the spool valve member (142).

**Patentansprüche**

1. Fluiddruck-Steuerventil-Mechanismus mit einem Gehäuse (102) mit einer darin befindlichen Ventilbohrung (134), wobei die Ventilbohrung (134) eine zylindrische Wand (148) besitzt und die zylindrische Wand (148) einen ersten Ringeinschnitt (156) und einen zweiten Ringeinschnitt (166) mit gegenseitigem axialen Abstand darin ausgebildet enthält;

einem fluiddruck-aufnehmenden Durchlaß (128) in dem Gehäuse (102), der ausgelegt ist, den vollen Versorgungsfluiddruck von einer Fluiddruckquelle (128, 230) aufzunehmen;

einem Fluiddruck-Betätigungsleistungs-Kammerdurchlaß (162, 164), der in dem Gehäuse (102) axial zwischen dem ersten und dem zweiten Ringeinschnitt (156, 166) mit axialem Abstand von diesen ausgebildet und dazu ausgelegt ist, Fluid mit gesteuertem Druck zu einem fluiddruckbetätigten Glied (244) zu leiten;

einem Fluiddruck-Druckablaß (154), der in dem Gehäuse (102) mit axialem Abstand von und auf der dem zweiten Ringeinschnitt (166) gegenüberliegenden Seite des ersten Ringeinschnitts (156) ausgebildet ist;

einem hin- und herbewegbar in der Gehäusebohrung (134) aufgenommenen Ventilschieberglied (142), das besitzt:

Durchlaßmittel (224) in dem Schieberventilglied (142), das zum dem zweiten Ringeinschnitt (166) und auch zu dem Ablaß (154) offen ist;

erste und zweite Ringdichtungen (220, 216), die normal zwischen dem Ventilglied (142) und der Bohrungswand (148) so abdichten, daß die erste Ringdichtung (220) immer gegen Fluiddruckverbindung zwischen dem ersten Ringeinschnitt (156) und dem Ablaß (154) abdichtet und die zweite Ringdichtung (216) normalerweise gegen Fluiddruckverbindung zwischen dem ersten Ringeinschnitt (156) und dem Fluiddruck-Betätigungsleistungs-Kammerdurchlaß (162, 164) abdichtet, wobei die zweite Ringdichtung (216) axial auf eine anfängliche Axialbetätigungsbewegung des Ventilglieds (142) hin in den ersten Ringeinschnitt (156) bewegt wird, um Fluiddruckverbindungen von dem ersten Ringeinschnitt (156) zu dem Fluiddruck-Betätigungsleistungs-Kammerdurchlaß (162, 164) und einem Ventilglied-Abschnitt (206) mit verringertem Durchmesser zu öffnen, und dadurch ausgelegt ist, Versorgungsfluiddruck von der Druckquelle (228, 230) zu dem Fluiddruck-Betätigungsleistungs-Kammerdurchlaß (162, 164) zu liefern,

dadurch gekennzeichnet, daß das Schieberventilglied (142) auch einen ersten mit ersten und zweiten Dichtnuten (218, 212) ausgeformten Steg (210) besitzt, wobei die Nuten axial weiter voneinander entfernt sind als die Axialbreite des ersten Ringeinschnitts (156) beträgt, und einen axial von dem ersten Steg (210) durch einen Ventilglied-Abschnitt (206) mit verringertem Durchmesser getrennten zweiten Steg (198), der eine sich in Umfangsrichtung erstreckende Eckkante (204) besitzt, die einen Teil eines Steuerventils (168, 204) bildet und in Ventilbeziehung mit einer angepaßten inneren sich in Umfangsrichtung erstreckenden Eckkante (168) des zweiten Ringeinschnitts (166) steht, die einen anderen Teil des Steuerventils (168, 204) bildet, daß das Durchlaßmittel (224) in dem Schieberventilglied (142) durch den zweiten Steg (198) mündet; daß der Ventilglied-Abschnitt (206) mit verringertem Durchmesser in dauernder Fluidverbindung mit dem Fluiddruck-Betätigungsleistungs-Kammerdurchlaß (162, 164) ist; und daß die erste und die zweite Ringdichtung (220, 216) jeweils in der ersten bzw. zweiten Dichtnut (218, 212) angeordnet sind;

so daß axiale Betätigungsbewegung des Ventilglieds (142) die Steuerventil-Teile (204, 168) in Ventilbeziehung wirken läßt, um Fluiddruck und Fluidströmung von dem Fluiddruck-Betätigungsleistungs-Kammerdurchlaß (162, 164) zu modulieren und zu steuern, um den gewünschten Fluidbetätigungsdruck in dem Fluiddruck-Betätigungsleistungs-Kammerdurchlaß (162, 164) zu errichten und aufrecht zu erhalten, wobei überschüssiges Druckfluid an den Steuerventilteilen (204, 168) vorbei und durch den zweiten Ringeinschnitt (166) und den Ventilglieddurchlaß (224) zu dem Ablaß (154) austritt.

2. Fluiddruck-Steuerventil-Mechanismus nach Anspruch 1 in einem hydraulischen Leistungsverstärker (20) mit einem Verstärkergehäuse (16), mit einem hin- und herbewegbar in dem Verstärkergehäuse (16) zur Betätigung durch gesteuerten Hydraulikdruck von einer Fluiddruckquelle (228, 230) wie erwähnt aufgenommenen Leistungskolben (102), der Hydraulikdruckfluid von einem Hydraulikfluidbehälter (12) zieht, wobei der Leistungskolben (102) das Gehäuse (102) des Steuerventilmechanismus bildet, dadurch gekennzeichnet, daß eine erste Kammer (158) durch den Leistungskolben (102) und das Schieberventilglied (142) bestimmt ist, daß die erste und die zweite Ringdichtung (220, 216) an dem Schieberventilglied (142) mit Abstand voneinander versehen sind, um einen normalerweise abgeschlossenen Raum in der ersten Kammer (158) zu schaffen mit Hydraulikzulaufdruck, der darin durch die Fluiddruckquelle (228, 230) geschaffen ist, daß eine zweite Kammer (208) durch das Verstärkergehäuse (16) und den Leistungskolben (102) und das Schieberventilglied (142) bestimmt ist und eine Leistungsdruckkammer bildet, die ausgelegt ist, selektiv Hydraulikbetätigungsdruck von der ersten Kammer (158) aufzunehmen, um auf den Leistungskolben (102) zur Betätigung des Verstärkers (20) einzuwirken, daß eine dritte Kammer (200) durch den Leistungskolben (102) und das Schieberventilglied (142) bestimmt ist, wobei das Steuerventil (168, 204) ventilgesteuerte Verbindung zwischen der zweiten Kammer (208) und der dritten Kammer (200) schafft, während die dritte Kammer (200) in dauernder Fluidverbindung mit dem Behälter (12) ist, das Schieberventilglied (142) relativ zum Leistungskolben (102) in einer Verstärkerbetätigungsrichtung bewegbar ist, um die zweite Dichtung (216) Fluidverbindung zwischen der ersten (158) und der zweiten (208) Kammer öffnen zu lassen und auch das Steuerventil (168, 204) Druckströmung von der zweiten Kammer (208) zu der dritten Kammer (200) und dem Behälter (12) modulieren zu lassen, um den auf den Leistungskolben (102) einwirkenden effektiven Hydraulikfluiddruck in der zweiten Kammer (208) zu steuern und so Beaufschlagung und Lösung des Verstärkers (20) zu steuern, wobei das Schieberventilglied (142), sobald es gelöst wird, zu einer Stellung zurückkehrt, in der die zweite Dichtung (216) die erste Kammer (158) wieder als einen abgeschlossenen Raum herstellt und das Steuerventil (168, 204) öffnet, um Druck in der zweiten Kammer (200) zu dem Fluiddruck in der dritten Kammer (208) und dem Behälter (12) abzulassen.

3. Fluiddruck-Steuerventil-Mechanismus nach Anspruch 1 oder 2, dadurch gekennzeichnet, daß der erste Ringeinschnitt (156) eine ringförmige Hydraulikfluid-Versorgungsdruckkammer (158) in der Bohrungswand (148) um das Schieberventilglied (142) bildet, die zweite Dichtnut (212) sich in Umfangsrichtung in dem Schieberventilglied (142) erstreckt und die darin aufgenommene zweite Ringdichtung (216) aus einem gummiartigen (elastomeren) Material hergestellt ist, die zweite Ringdichtung (216) eine erste Stellung besitzt, in der sie gegen die Bohrungswand (148) und das Schieberventilglied (142) abdichtet, um Druckverlust der ringförmigen Hydraulikfluid-Versorgungsdruckkammer (158) an der zweiten Dichtung (216) vorbei zu verhindern, und durch Axialbewegung des Schieberventilgliedes (142) zu einer zweiten Stellung bewegbar ist, in der die zweite Dichtung (216) innerhalb der ringförmigen Hydraulikfluid-Versorgungsdruckkammer (158) angeordnet und in radialer Abstandsbeziehung von der Bohrungswand (148) ist, um so zuzulassen, daß Hydraulikfluid-Versorgungsdruck frei an der zweiten Dichtung (216) vorbeitritt, und die zweite Dichtung (216) einen kegelstumpfförmigrechtwinkligen Querschnitt besitzt, wobei die eine radial außen und zu der ringförmigen Hydraulikfluid-Versorgungsdruckkammer (158) gelegene rechtwinklige Querschnittsecke angefast ist, um die zweite Dichtung (216) im wesentlichen zu der Form vorzuformen, welche die zweite Dichtung (216) annimmt, wenn sie in der ersten Stellung ist, mit in der ringförmigen Hydraulikfluid-Versorgungsdruckkammer (158) auf ihre eine Seite und die angefaste Fläche (226) einwirkenden Druck, und dadurch den Dichtreibungszug auf die Bohrungswand (148) reduziert und die Druckverzerrung der zweiten Dichtung (216) an der der ringförmigen Hydraulikfluid-Versorgungsdruckkammer (158) gegenüberliegenden Seite zwischen der Bohrungswand (148) und dem Schieberventilglied (142) minimalisiert.

**Revendications**

1. Dispositif à soupape de régulation d'une pression de fluide, comprenant

un boîtier (102) dans lequel est ménagé un alésage de soupape (134), cet alésage de soupape (134) comportant une paroi cylindrique (148) et cette paroi cylindrique (148) comportant un premier évidement annulaire (156) et un second évidement annulaire (166) qui y sont ménagés à une certaine distance l'un de l'autre dans le sens axial,

un passage de réception de pression de fluide (128) ménagé dans le boîtier (102) et adapté pour recevoir la pression de fluide d'alimentation totale à partir d'une source de pression de fluide (228, 230),

un passage de chambre d'amplification à actionnement par pression de fluide (162, 164) ménagé dans le boîtier (102) dans une position intermédiaire, dans le sens axial, entre le premier et le second évidements annulaires (156, 166), en étant espacé axialement de ceux-ci, ce passage étant adapté pour conduire le fluide sous pression, faisant l'objet de la régulation, jusqu'à un organe actionné par pression de fluide (244),

un passage de pression (154), de mise à la bâche de la pression de fluide, ménagé dans le boîtier (102) et espacé axialement du premier évidement annulaire (156), sur le côté de celui-ci situé à l'opposé du second évidement annulaire (166), un obturateur-tiroir (142) logé dans l'alésage de boîtier (134) de façon à pouvoir s'y déplacer en va-et-vient et comportant:

des moyens de passage (224) ménagés dans l'obturateur-tiroir (142) et communiquant avec le second évidement annulaire (166), ainsi qu'avec le passage (154) de mise à la bâche,

un premier et un second joints annulaires d'étanchéité (220, 210) assurant normalement l'étanchéité entre l'obturateur (142) et la paroi d'alésage (148) d'une façon telle que le premier joint annulaire (220) assure toujours l'étanchéité vis-à-vis d'une propagation de la pression de fluide entre le premier évidement annulaire (156) et le passage (154) de mise à la bâche et que le second joint annulaire (216) assure normalement l'étanchéité vis-à-vis de la propagation de la pression de fluide entre le premier évidement annulaire (156) et le passage de chambre d'amplification à actionnement par pression de fluide (162, 164),

le second joint annulaire d'étanchéité (216) étant déplacé axialement jusque dans le premier évidement annulaire (156) lors d'un déplacement axial initial, d'actionnement, de l'obturateur (142), de façon à permettre la propagation de la pression de fluide depuis le premier évidement annulaire (156) jusqu'au passage de chambre d'amplification à actionnement par pression de fluide (162, 164) et à une partie à diamètre réduit (206) de l'obturateur, et étant donc adapté pour fournir une pression d'alimentation de fluide de la source de pression (228, 230) au passage de chambre d'amplification à actionnement par pression de fluide (162, 164),

caractérisé en ce que l'obturateur-tiroir (142) comporte aussi une première portée cylindrique (210), dans laquelle sont ménagées une première et une seconde gorges (218, 212) pour joint détanchéité qui sont axialement plus espacées l'une de l'autre que la largeur du premier évidement annulaire (156) dans le sens axial, et une seconde portée cylindrique (198) espacée axialement de la première portée cylindrique (210) par une partie à diamètre réduit (206) de l'obturateur, cette seconde portée cylindrique (198) comportant une arête vive circonférentielle (204) formant une première partie d'une soupape de régulation (168, 204) et disposée de façon à réaliser un fonctionnement de soupape en coopération avec une arête vive circonférentielle intérieure conjuguée (168) du second évidement annulaire (166), formant une autre partie de la soupape de régulation (168, 204), en ce que les moyens de passage (224) ménagés dans l'obturateur-tiroir (142) débouchent sur la seconde portée cylindrique (198), en ce que la partie à diamètre réduit (206) de l'obturateur offre au fluide une communication permanente avec le passage de chambre d'amplification à actionnement par pression de fluide (162, 164), et en ce que le premier et le second joints annulaires d'étanchéité (220, 216) sont disposés respectivement dans la première et la seconde gorges pour joint d'étanchéité (218, 212),

le déplacement axial d'actionnement effectué par l'obturateur (142) faisant agir les parties de soupape (204, 168) suivant un fonctionnement de soupape de façon à moduler, en en assurant la régulation, la pression et l'écoulement du fluide provenant du passage de chambre d'amplification à actionnement par pression de fluide (162, 164), de façon à établir et maintenir une pression voulue d'actionnement de fluide dans ce passage de chambre d'amplification (162, 164), l'excès de fluide sous pression étant renvoyé à la bâche, vers le passage (154) de mise à la bâche, en passant devant les parties de soupape (204, 168) et en traversant le second évidement annulaire (166) et le passage d'obturateur (224).

2. Dispositif à soupape de régulation d'une pression de fluide, suivant la revendication 1, disposé dans un amplificateur hydraulique d'effort (20) comprenant un boîtier d'amplificateur (16) comportant un piston d'amplification (102) logé dans ce boîtier d'amplificateur (16) de façon à pouvoir s'y déplacer en va-et-vient et à être actionné par une pression hydraulique régulée provenant de ladite source de pression de fluide (228, 230) prélevant un fluide sous pression hydraulique à partir d'un réservoir de fluide hydraulique (12), le piston d'amplification (102) formant le boîtier (102) du dispositif à soupape de régulation, caractérisé en ce qu'une première chambre (158) est délimitée par le piston d'amplification (102) et l'obturateur-tiroir (142), en ce que le premier et le second joints annulaires d'étanchéité (220, 216) sont espacés l'un de l'autre sur cet obturateur-tiroir (142) de façon à assurer un espace normalement fermé dans la première chambre (158) dans laquelle règne la pression d'alimentation hydraulique fournie par la source de pression hydraulique (228, 230), en ce qu'une deuxième chambre (208) est délimitée par le boîtier d'amplificateur (16), le piston d'amplification (102) et l'obturateur-tiroir (142) et constitue une chambre de pression d'amplification adaptée pour recevoir de manière sélective une pression d'actionnement hydraulique provenant de la première chambre (158), de façon à agir sur le piston d'amplification (102) en vue d'actionner l'amplificateur (20), et en ce qu'une troisième chambre (200) est délimitée par le piston d'amplification (102) et l'obturateur-tiroir (142), la soupape de régulation (168, 204) assurant une communication, du type à fonctionnement de soupape, entre la deuxième chambre (208) et la troisième chambre (200), cette troisième chambre (200) offrant au fluide une communication permanente avec le réservoir (12), l'obturateur-tiroir (142) étant mobile par rapport au piston d'amplification (102) dans un sens d'actionnement de l'amplificateur, de façon à faire ouvrir au second joint d'étanchéité (216) la communication offerte au fluide entre la première chambre (158) et la deuxième (208) chambre et à faire aussi moduler à la soupape de régulation (168, 204) l'écoulement sous pression de la deuxième chambre (208) à la troisième chambre (200) et au réservoir (12) de façon à assurer la régulation de la pression effective de fluide hydraulique régnant dans la deuxième chambre (208) et s'exerçant sur le piston d'amplification (102) et à assurer ainsi une régulation de l'actionnement et du relâchement de l'amplificateur (20), l'obturateur-tiroir (142) retournant, lorsqu'il est relâché, à une position dans laquelle le second joint d'étanchéité (216) replace la première chambre (158) dans un état d'espace fermé et la soupape de régulation (168, 204) s'ouvre de façon à délester la pression régnant dans la deuxième chambre (208) jusqu'à la valeur de la pression hydraulique régnant dans la troisième chambre (200) et le réservoir (12).

3. Dispositif à soupape de régulation d'une pression de fluide, suivant la revendication 1 ou 2, caractérisé en ce que le premier évidement annulaire (156) constitue, dans la paroi (148) de l'alésage et autour de l'obturateur-tiroir (142), une chambre annulaire (158) à la pression d'alimentation du fluide hydraulique, en ce que la seconde gorge pour joint d'étanchéité (212) s'étend circonférentiellement dans l'obturateur-tiroir (142) et le second joint annulaire d'étanchéité (216) qui y est logé est en une matière analogue au caoutchouc (élastomère), en ce que ce second joint annulaire d'étanchéité (216) possède une première position dans laquelle il assure l'étanchéité vis-à-vis de la paroi (148) de l'alésage et de l'obturateur-tiroir (142), de façon à empêcher, à partir de la chambre annulaire (158) à la pression d'alimentation du fluide hydraulique, une perte de pression au passage de ce second joint d'étanchéité (216), et est mobile, sous l'effet du déplacement axial de l'obturateur-tiroir (142), jusqu'à une seconde position dans laquelle ce second joint d'étanchéité (216) est disposé à l'intérieur de la chambre annulaire (158) à la pression d'alimentation du fluide hydraulique et est espacé, dans le sens radial, de la paroi (148) de l'alésage, de façon à permettre à la pression d'alimentation du fluide hydraulique de se propager librement en passant devant ce second joint d'étanchéité (216), et en ce que ce second joint d'étanchéité (216) possède une section transversale rectangulaire à bord abattu dans laquelle l'angle de la section transversale rectangulaire qui est situé, dans le sens radial, vers l'extérieur et vers la chambre annulaire (158) à la pression d'alimentation de fluide hydraulique, est abattu de façon à donner à ce second joint d'étanchéité (216) une forme préalable correspondant pratiquement à la forme que ce second joint d'étanchéité (216) adopte lorsqu'il est dans la première position, dans laquelle la pression régnant dans la chambre annulaire (158) à la pression d'alimentation du fluide hydraulique agit sur l'une de ses faces et sur la surface (226) de l'angle abattu, ce qui réduit ainsi la force de résistance due au frottement que présente le joint d'étanchéité sur la paroi (148) de l'alésage et rend minimale la déformation, due à la pression, du second joint d'étanchéité (216), sur sa face opposée à la chambre annulaire (158) à la pression d'alimentation du fluide hydraulique, située entre la paroi (148) de l'alésage et l'obturateur-tiroir (142).

Fig.1

EP 0 200 386 B1

Fig.2

Fig.3

Fig.4